# EUROPÄISCHE PATENTANMELDUNG

(11) **EP 4 538 564 A1**
(43) Veröffentlichungstag der Anmeldung: **16.04.2025**
(21) Anmeldenummer: 23202412.5
(22) Anmeldetag: 09.10.2023
(51) Int. Cl.: F16H 61/32

(54) **VERFAHREN ZUM SCHALTEN EINES ELEKTRISCH SCHALTBAREN GETRIEBES FÜR EIN FAHRZEUG, INSBESONDERE NUTZFAHRZEUG, COMPUTERPROGRAMM UND/ODER COMPUTERLESBARES MEDIUM, STEUERGERÄT, ELEKTRISCH SCHALTBARES GETRIEBE, ACHSANORDNUNG UND FAHRZEUG, INSBESONDERE NUTZFAHRZEUG**

(71) Anmelder: ZF CV Systems Global GmbH, 3006 Bern (CH)
(72) Erfinder: CALLESEN, Matthias, 30974 Wennigsen (DE); WINKELHOLZ, Uwe, 30974 Wennigsen (DE)
(74) Vertreter: Schäferjohann, Volker

(57) **Zusammenfassung**

Verfahren (100) zum Schalten eines elektrisch schaltbaren Getriebes (230) für ein Fahrzeug (200a), insbesondere Nutzfahrzeug (200b), wobei das Verfahren (100) aufweist: Erfassen (110) eines eine Blockierstellung (231) eines Schaltelements (235) des Getriebes (230) betreffenden Zustands (237) des Schaltelements (235); Bestimmen (120) eines Regelsignals (255) zum Regeln einer Bewegung des Schaltelements (235) unter Berücksichtigung des Zustands (237) und/oder der Blockierstellung (231), wobei das Regelsignal (255) eine Zielgröße (Z) der Bewegung des Schaltelements (235) und eine Oszillation (O) um die Zielgröße (Z) definiert; und Ausgeben (130) des Regelsignals (255) zum Bewegen des Schaltelements (235) anhand des Regelsignals (255).

## Beschreibung

Die Erfindung betrifft ein Verfahren zum Schalten eines elektrisch schaltbaren Getriebes für ein Fahrzeug, insbesondere Nutzfahrzeug. Die Erfindung betrifft auch ein Computerprogramm und/oder computerlesbares Medium, ein Steuergerät für ein Fahrzeug, insbesondere Nutzfahrzeug, mit einem elektrisch schaltbaren Getriebe, ein elektrisch schaltbares Getriebe mit einem Schaltelement, eine Achsanordnung für ein Fahrzeug, insbesondere Nutzfahrzeug, und ein Fahrzeug, insbesondere Nutzfahrzeug.

Insbesondere für Nutzfahrzeuge sind sogenannte Klauenkupplungen zum Schalten von Getrieben bekannt. Um einen Schaltvorgang zu bewerkstelligen, wird ein Schaltelement des Getriebes durch einen Aktuator bewegt, um mit einem weiteren Schaltelement in Wirkverbindung gebracht zu werden und/oder um eine derartige Wirkverbindung zu lösen. Dabei sind insbesondere bei pneumatisch schaltbaren Getrieben Blockierstellungen als ein typischer und immer wieder auftretender Zustand bekannt, in dem die zwei Schaltelemente beispielsweise in einer Zahn-zu-Zahn-Stellung stehen, wodurch eine Einspurbewegung behindert wird. Ferner kann insbesondere unter Last ein Entkoppeln von zwei miteinander kämmenden Schaltelementen durch zwischen den Schaltelementen wirkende Momente erschwert und/oder praktisch nicht durchführbar sein (sog. engl. "sticking") und so eine Blockierstellung auftreten.

Um eine Blockierstellung aufzulösen, wird typischerweise bei einem pneumatisch schaltbaren Getriebe eine Kraft zum Bewegen des Schaltelements erhöht, um die Blockierstellung aufzulösen und falls das Auflösen der Blockierstellung nicht gelingt, wird die Kraft aufgehoben und der Schaltvorgang wird erneut versucht.

Eine Blockierstellung kann zu einem Verzögern der Schaltzeit führen, da das Erhöhen der Kraft, ein Auflösen der Blockierstellung und ein möglicher erneuter Schaltvorgang Zeit in Anspruch nehmen. Ferner können derartige Blockierstellungen zu einer Reduktion der Lebensdauer der Getriebeelemente führen. Durch die entstehenden Kräfte beim Schalten können hohe mechanische Beanspruchungen auftreten, womit das Getriebe typischerweise aufwendig und komplex ausgelegt werden muss, um den Kräften standhalten zu können.

Elektrisch schaltbare Getriebe sind aus dem Stand der Technik bekannt. Dabei wird eine Zielposition und/oder eine Bewegung eines elektrischen Schaltaktuators ähnlich zu der Zielposition eines pneumatischen Schaltaktuators eingestellt. Die Zielposition wird vorgegeben und der Schaltaktuator stellt eine Bewegung des Schaltelements des Getriebes gemäß der Anforderung unter Verwendung einer Kraft ein.

DE 694 02 779 T2 offenbart ein Verfahren zum Steuern einer auf einen Schaltmechanismus eines automatischen mechanischen Getriebes bei einem Schaltvorgang ausgeübten Kraft, wobei das Getriebe wenigstens eine Schaltstange aufweist, der Schaltmechanismus einen von einem Motor angetriebenen Schaltfinger enthält, der Schaltfinger mit der Schaltstange zusammenwirkt, um das Schalten des Getriebes zu bewirken, wobei das Verfahren beinhaltet, dass ein Motor mit einem impulsbreitenmodulierten Steuersignal mit variablem Lastzyklus erregt wird, um einen Zielstrom zu erzeugen, der an den Motor angelegt wird, und wobei der von dem Motor gezogene Strom erfasst wird, wobei ständiges Nachregulieren des Lastzyklus des Steuersignales bei einem Schaltvorgang als eine Funktion der Fehlersumme zwischen dem erfassten Strom und dem Zielstrom zuzüglich der Änderungsgeschwindigkeit des Fehlers, um den Fehler auf Null zu vermindern. Der Motor ist an eine Gleichspannungsquelle, wie bspw. die Fahrzeugbatterie, angeschlossen.

Eine Steuerelektronik führt dabei alle relevanten Rechenoperationen aus und stellt die Kommunikation zu anderen Elektroniken des Fahrzeugs sicher. Diese Steuerelektronik kontrolliert nach dem beschriebenen Verfahren den Motor und wandelt die Gleichspannung, bspw. aus der Fahrzeugbatterie, in geeignete Phasenströme des Motors.

Der Erfindung liegt die Aufgabe zugrunde, den Stand der Technik zu bereichern und ein verbessertes Verfahren zum Schalten eines elektrisch schaltbaren Getriebes bereitzustellen. Insbesondere kann die Erfindung die Aufgabe lösen, eine Blockierstellung effektiv aufzulösen und/oder zu vermeiden.

Die Aufgabe wird durch ein Verfahren nach Anspruch 1 sowie den Gegenständen nach den weiteren unabhängigen Ansprüchen gelöst. Die Unteransprüche geben optionale Weiterbildungen der Erfindung an.

Gemäß der Erfindung wird ein Verfahren zum Schalten eines elektrisch schaltbaren Getriebes für ein Fahrzeug, insbesondere Nutzfahrzeug, bereitgestellt. Dabei weist das Verfahren auf: Erfassen eines eine Blockierstellung eines Schaltelements des Getriebes betreffenden Zustands des Schaltelements; Bestimmen eines Regelsignals zum Regeln einer Bewegung des Schaltelements unter Berücksichtigung des Zustands und/oder der Blockierstellung, wobei das Regelsignal eine Zielgröße der Bewegung des Schaltelements und eine Oszillation um die Zielgröße definiert; und Ausgeben des Regelsignals zum Bewegen des Schaltelements anhand des Regelsignals.

Dabei wurde erkannt, dass es bei einem elektrisch schaltbaren Getriebe möglich ist, die Bewegung des Schaltelements differenzierter als bei beispielsweise einem pneumatisch schaltbaren Getriebe zu erfassen und zu regeln. Damit ist es möglich, den Zustand des Schaltelements zu erfassen, in dem die Blockierstellung detektiert wird und/oder prognostiziert werden kann. Der Zustand kann dafür beispielsweise eine durch einen Schaltaktuator zum Bewegen des Schaltelements begründete Bewegung des Schaltelements charakterisieren.

Damit die Blockierstellung aufgelöst und/oder vermieden wird, wird die Bewegung des Schaltelements angepasst, indem das Regelsignal derart bestimmt wird, dass einer die Bewegung charakterisierenden Zielgröße die Oszillationen bzw. Pulsation aufgeprägt wird. Mit anderen Worten wird die Bewegung des Schaltelements gemäß der Zielgröße geregelt. Zusätzlich zu der Zielgröße wird auf das Regelsignal die Oszillation aufgeprägt. Dabei kann die Oszillationen eine beliebige zeitliche

Änderung der Zielgröße sein, die die Zielgröße insbesondere alternierend vergrößert und verkleinert. Mit anderen Worten kann die Oszillation eine harmonische Oszillation umfassen, sich aus einer Vielzahl von harmonischen Oszillationen zusammensetzen und/oder eine nicht-harmonische Oszillationen umfassen.

Die Erfindung hat erkannt, dass es damit möglich ist, eine dynamische Kraft zwischen dem Schaltelement und dem weiteren Schaltelement zu generieren, was zu einer höheren Wahrscheinlichkeit führt, die Blockierstellung aufzulösen. Durch die Oszillation können Mikrobewegungen entstehen, die die Blockierstellung auflösen und/oder vermeiden. Damit wird die Schaltperformance verbessert bzw. die Zeit zum Durchführen eines Schaltvorgang wird vermindert. Eine hohe mechanische Belastung des Getriebes durch eine übermäßig hohe Kraft kann somit vermieden werden. Damit ist eine zielgerichtetere und effektivere Auslegung der Komponenten des Getriebes möglich, was eine Kostenreduktion erzielen kann.

Optional gibt der Zustand des Schaltelements die Blockierstellung wieder. Damit ist es möglich, effektiv die Blockierstellung zu charakterisieren. Beispielsweise kann der Zustand durch eine Position des Schaltelements, die über einen Positionssensor erfassbar ist, und sich optional über ein vorbestimmtes zeitliches Intervall nicht ändert, definiert sein. Alternativ oder zusätzlich gibt der Zustand die durch eine Bewegung des Schaltelements resultierende Blockierstellung an. Dabei wurde erkannt, dass eine Blockierstellung vermieden werden kann, wenn die Blockierstellung anhand der Bewegung des Schaltelements prognostiziert wird. Dabei kann die Bewegung des Schaltelements erfasst werden, um anhand einer Prognose der Position des Schaltelements festzustellen, ob bei einer weiteren Bewegung des Schaltelements potentiell eine Blockierstellung vorliegen könnte.

Optional umfasst die Zielgröße eine Kraft, eine Geschwindigkeit und/oder eine Position. Damit kann die Zielgröße je nach Anwendungsfall geregelt werden. Eine Regelung der Geschwindigkeit und/oder der Position ist dabei durch die elektrische Schaltbarkeit des Getriebes effektiv möglich.

Optional definiert die Oszillation eine Frequenz der Bewegung des Schaltelements. Dabei kann die Oszillation eine harmonische beziehungsweise sinusförmige Oszillation sein. Die Frequenz der Bewegung kann dabei eine charakteristische, eine minimale und/oder eine maximale Frequenz sein. Optional kann die Oszillation eine Mehrzahl von Frequenzen der Bewegung des Schaltelements definieren, um komplexere Oszillationen mit verschiedenen Zeitskalen zum Erzielen unterschiedlicher Mikrobewegungen zu erzielen.

Optional ist die Oszillation abhängig von einer Drehzahldifferenz zwischen dem Schaltelement und einem mit dem Schaltelement in Wirkverbindung bringbaren weiteren Schaltelement. Damit kann die Oszillation der Bewegung des Schaltelements abhängig sein von der Drehzahldifferenz der beiden Schaltelemente. Damit können zwei die Kinematik des Schaltvorgang charakterisierende Größen aufeinander abgestimmt werden. Dabei kann insbesondere eine Frequenz und/oder eine Amplitude der Oszillation abhängig von der Drehzahldifferenz sein.

Optional erfolgt das Bestimmen das Regelsignals derart, dass eine Kraft auf das Schaltelement eine Kraftschwelle unterschreitet. Dadurch ist es möglich, die Oszillation zu beschränken. Durch das Unterschreiten der Kraftschwelle kann erzielt werden, dass keine zu hohen Kräfte auf Komponenten des Getriebes wirken, was die Konstruktion und Auslegung des Getriebes positiv beeinflussen kann. Demgemäß kann die Kraftschwelle durch die Konstruktion des Getriebes gewählt und/oder die Konstruktion des Getriebes auf eine zu erzielende Kraftschwelle abgestimmt sein.

Optional weist das Verfahren auf: Erfassen eines Verlassens der Blockierstellung; Bestimmen eines angepassten Regelsignals zum Regeln der Bewegung des Schaltelements nach dem Verlassen der Blockierstellung, wobei das angepasste Regelsignal eine Zielgröße der Bewegung des Schaltelements ohne die Oszillation definiert; und Ausgeben des angepassten Regelsignals zum Bewegen des Schaltelements anhand des angepassten Regelsignals. Dabei wurde erkannt, dass es möglich ist, nach dem Auflösen der Blockierstellung zu einer oszillationsfreien Kontrolle des Schaltelements übergehen zu können, um ein effektives Schalten zu ermöglichen.

Gemäß einem weiteren Aspekt der Erfindung wird ein Computerprogramm und/oder computerlesbares Medium bereitgestellt. Das Computerprogramm und/oder computerlesbare Medium umfasst Befehle, die bei der Ausführung des Programms bzw. der Befehle durch einen Computer diesen veranlassen, das hier beschriebene Verfahren und/oder die Schritte des hier beschriebenen Verfahrens durchzuführen. Das Computerprogramm und/oder computerlesbare Medium kann Befehle umfassen, um als optional beschriebene Schritte des Verfahrens durchzuführen, um einen entsprechenden technischen Effekt zu erzielen.

Gemäß einem weiteren Aspekt der Erfindung wird ein Steuergerät für ein Fahrzeug, insbesondere Nutzfahrzeug, mit einem elektrisch schaltbaren Getriebe bereitgestellt. Das Steuergerät kann dazu eingerichtet sein, als optional beschriebene Schritte des Verfahrens durchzuführen, um einen entsprechenden technischen Effekt zu erzielen.

Gemäß einem weiteren Aspekt der Erfindung wird ein elektrisch schaltbares Getriebe bereitgestellt. Das elektrisch schaltbare Getriebe weist ein Schaltelement und das oben beschriebene Steuergerät auf. Optional ist das elektrisch schaltbare Getriebe ein automatisiertes Handschaltgetriebe (engl. "automatic manual transmission", AMT).

Gemäß einem Aspekt der Erfindung wird eine Achsanordnung für ein Fahrzeug, insbesondere Nutzfahrzeug, bereitgestellt. Dabei weist die Achsanordnung das oben beschriebene elektrisch schaltbares Getriebe auf. Die Achsanordnung und/oder das Steuergerät des elektrisch schaltbaren Getriebes kann dazu eingerichtet sein, als optional und/oder vorteilhaft beschriebene Schritte des Verfahrens durchzuführen, um einen entsprechenden technischen Effekt zu erzielen.

Gemäß einem weiteren Aspekt der Erfindung wird ein Fahrzeug, insbesondere Nutzfahrzeug, bereitgestellt. Das Fahrzeug weist ein elektrisch schaltbares Getriebe mit dem hier beschriebenen Steuergerät und/oder die oben beschriebene Achsanordnung auf. Das Fahrzeug und/oder das Steuergerät kann dazu eingerichtet sein, als optional und/oder vorteilhaft beschriebene Schritte des Verfahrens durchzuführen, um einen entsprechenden technischen Effekt zu erzielen.

Weitere Vorteile und Merkmale der Erfindung sowie deren technische Effekte ergeben sich aus den Figuren und der Beschreibung der in den Figuren gezeigten bevorzugten Ausführungsformen. Dabei zeigen
Fig. 1 eine schematische Darstellung eines Fahrzeugs, insbesondere Nutzfahrzeugs, gemäß einer Ausführungsform der Erfindung;
Fig. 2 eine schematische Darstellung eines Bewegungsprofils zum Bewegen eines Schaltelements eines elektrisch schaltbaren Getriebes gemäß einer Ausführungsform der Erfindung; und
Fig. 3 eine schematische Darstellung eines Ablaufs eines Verfahrens gemäß einer Ausführungsform der Erfindung.

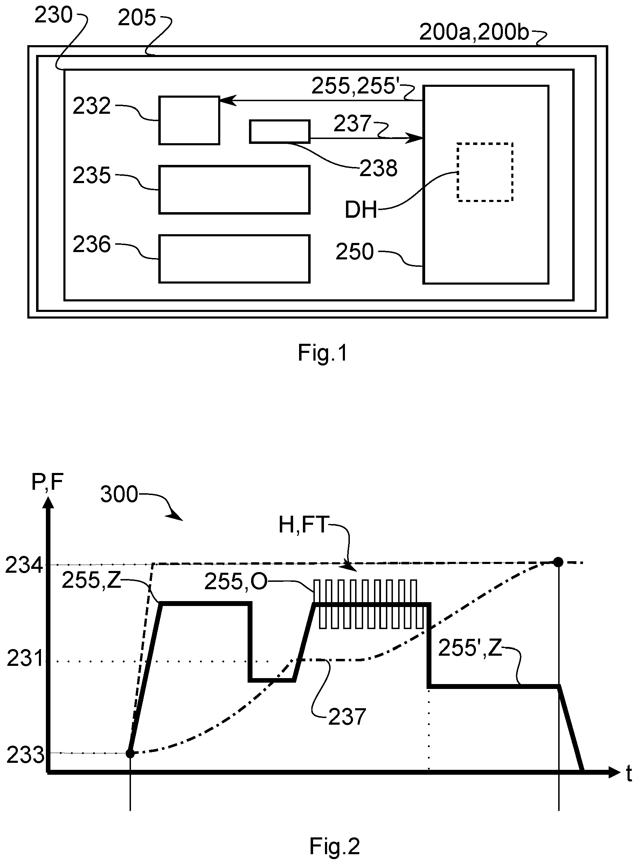

Figur 1 zeigt eine schematische Darstellung eines Fahrzeugs 200a, insbesondere Nutzfahrzeugs 200b, gemäß einer Ausführungsform der Erfindung. Das Fahrzeug 200a, insbesondere Nutzfahrzeug 200b, wird im Folgenden als Fahrzeug 200a, 200b bezeichnet. Das Fahrzeug 200a, 200b ist ein Landfahrzeug. Das Fahrzeug 200a, 200b ist beispielsweise ein Lastkraftwagen, ein Bus und/oder eine Zugmaschine eines mehrgliedrigen Fahrzeugs.

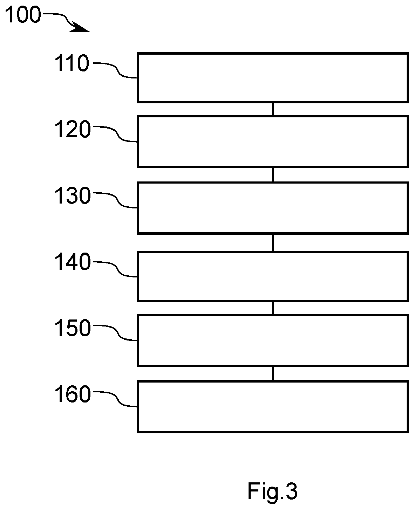

Das Fahrzeug 200a, 200b ist dazu eingerichtet, das mit Bezug zu Figur 3 beschriebene Verfahren 100 durchzuführen. Dafür umfasst das Fahrzeug 200a, 200b ein elektrisch schaltbares Getriebe 230. Das elektrisch schaltbare Getriebe 230 weist ein Schaltelement 235 und ein weiteres Schaltelement 236 auf. Ein Schaltvorgang wird erzielt, indem beispielsweise das Schaltelement 235 aus einer Neutralstellung 233 mit dem weiteren Schaltelement 236 in einer Endposition 234 in Eingriff gebracht wird (siehe Figur 2). Dabei ändert sich ein Abstand zwischen dem Schaltelement 235 und dem weiteren Schaltelement 236. Eine den Abstand zwischen dem Schaltelement 235 und dem weiteren Schaltelement 236 beschreibende Größe wird im Folgenden als Position P bezeichnet. Jedes der Schaltelemente 235, 236 kann jeweils mit einer Drehzahl rotieren. Dabei kann sich eine Drehzahldifferenz DH zwischen dem Schaltelement 235 und dem zweiten Schaltelement 236 einstellen.

Um die Position P einzustellen und/oder zu regeln, umfasst das Getriebe 230 ein Steuergerät 250 und einen regelbaren elektrischen Schaltaktuator 232 zum Betätigen des Schaltelements 235. Der regelbare elektrische Schaltaktuator 232 umfasst beispielsweise einen elektronisch kommutierten Synchronmotor beziehungsweise einen bürstenlosen Gleichstrommotors als Stellmotor.

Das Steuergerät 250 ist ferner dazu eingerichtet, das mit Bezug zu Figur 3 beschriebene Verfahren 100 durchzuführen, um ein Schalten des elektrisch schaltbaren Getriebes 230 durchzuführen.

Dafür weist das Getriebe 230 ein mit dem Steuergerät 250 verbundenen Positionssensor 237 auf. Der Positionssensor 237 ist dazu eingerichtet, die Position P des Schaltelements 235 zu erfassen. Das Steuergerät 250 ist dazu eingerichtet, die Position P von dem Positionssensor 237 zu empfangen. Anhand der Position P kann das Steuergerät 250 die Bewegung des Schaltelements 235 so einen eine Blockierstellung 231 (siehe Figur 2) des Schaltelements 235 betreffenden Zustand 237 erfassen. Der Zustand 237 kann dabei die Position P des Schaltelements 235 in der Blockierstellung 231 und/oder eine durch eine Bewegung des Schaltelements 235 resultierende Blockierstellung 231 angeben. Ferner kann anhand der erfassten Position P ein Verlassen der Blockierstellung 231 ermittelt werden. Das Steuergerät 250 ist dazu eingerichtet, die Drehzahldifferenz DH zu erfassen und/oder zu ermitteln.

Das Steuergerät 250 ist dazu eingerichtet, ein Regelsignal 255 und ein angepasste Regelsignal 255' zu bestimmen. Das Regelsignal 255 zum Regeln der Bewegung des Schaltelements 235 wird unter Berücksichtigung des Zustands 237 und/oder der Blockierstellung 231 bestimmt, wobei das Regelsignal 255 eine Zielgröße Z der Bewegung des Schaltelements 235 und eine Oszillation O um die Zielgröße Z definiert (siehe Figur 2). Wenn das Verlassen der Blockierstellung 231 erfasst wurde, kann das angepasste Regelsignal 255' zum Regeln der Bewegung des Schaltelements 235 nach dem Verlassen der Blockierstellung 231 bestimmt werden, wobei das angepasste Regelsignal 255' eine Zielgröße Z der Bewegung des Schaltelements 235 ohne die Oszillation O definiert (siehe Figur 2). Das Regelsignal 255 und das angepasste Regelsignal 255' sind mit Bezug zu den Bewegungsprofil 300 gemäß Figur 2 beschrieben.

Wie in Figur 1 dargestellt, sind das Steuergerät 250 und der Schaltaktuator 232 miteinander kommunikationstechnisch verbunden, damit das Steuergerät 250 das das Regelsignal 255 und das angepasste Regelsignal 255' an den Schaltaktuator 232 zum Bewegen des Schaltelements 235 übermitteln beziehungsweise ausgeben kann.

Figur 2 zeigt eine schematische Darstellung eines Bewegungsprofils 300 zum Bewegen eines Schaltelements 235 eines elektrisch schaltbaren Getriebes 230 gemäß einer Ausführungsform der Erfindung. Ein derartiges Getriebe 230 ist mit Bezug zu Figur 1 beschrieben. Figur 2 wird unter Bezugnahme auf Figur 1 und deren Beschreibung beschrieben.

Das Bewegungsprofil 300 gemäß Figur 2 definiert einen Zusammenhang der Position P und einer Kraft F jeweils in Abhängigkeit der Zeit t, jeweils in einer beliebigen Skala. Dabei ist die Zeit t als Ordinate (Wert auf x-Achse) aufgetragen und die Position P und die Kraft F sind als Abszisse (Wert auf y-Achse) aufgetragen. Dabei sind als Position P eine Neutralstellung 233, eine Blockierstellung 231 und eine Endposition 234 illustriert.

In einem Fall ohne ein Blockieren in der Blockierstellung 231 kann das Schaltelement 235 von der Neutralstellung 233 zu der Endposition 234 durch eine vergleichsweise schnelle Bewegung verbracht werden, siehe die die Positon P des Schaltelements 235 illustrierende gestrichene Linie.

Mit der punktgestrichenen Linie ist die Position P des Schaltelements 235 bei einer Bewegung dargestellt, bei der das Schaltelement 235 in die Blockierstellung 231 gerät. Dabei wird die Kraft F zur Bewegung des Schaltelements 235 als Zielgröße Z geregelt. In einer anderen Ausführungsform kann die Zielgröße Z auch eine Geschwindigkeit und/oder eine Position P des Schaltelements 235 umfassen.

Bevor das Schaltelement 235 die Blockierstellung 231 in Figur 2 erreicht, wird das Schaltelement 235 kraftgeregelt bewegt, wie durch die Krümmung der Position P indiziert. Dabei ist die Kraft F als Zielgröße Z die Regelgröße 255 für die Bewegung des Schaltelements 235 und ist als starke (fette) durchgezogene Linie dargestellt.

Bevor ein Einspuren des Schaltelements 235 und des weiteren Schaltelements 236 erfolgen kann, wird die Kraft F erniedrigt, um ein sanftes und somit schonendes und leises Einspuren und Schalten zu ermöglichen.

Das Schaltelement 235 erreicht jedoch die Blockierstellung 231. In der Blockierstellung 231 verbleibt das Schaltelement 235 kurzzeitig. Die Position P wird in der Blockierstellung 231 für ein Zeitintervall erfasst und entspricht somit dem Zustand Z, dass das Schaltelment 235 in der Blockierstellung 231 ist. Damit die Blockierstellung 231 möglichst schnell aufgelöst und verlassen werden kann, wird der Bewegung des Schaltelements 235 eine Oszillation O der das Schaltelement 235 bewegenden Kraft F aufgeprägt. Die Kraft F mit der Oszillation O bildet die Regelgröße 255 für die Bewegung des Schaltelements 235 und ist als dünne (feine) durchgezogene Linie dargestellt. Die Oszillation O ist eine periodische Änderung der Kraft F um die Zielgröße Z. Die Kraft F ändert sich somit alternierend und ist alternierend kleiner und größer als die Zielgröße Z.

Dabei weist die Oszillation O eine Amplitude und eine Frequenz H auf. Die Oszillation O und insbesondere deren Frequenz H ist abhängig von der Drehzahldifferenz DH zwischen dem Schaltelement 235 und weiteren Schaltelement 236. In dem kraftgeregelten Fall gemäß Figur 2 wird das Regelsignals 255 derart bestimmt, dass die maximale Kraft F, also die Summe aus den Amplituden der Zielgröße Z und der Oszillation O, eine Kraftschwelle FT unterschreitet. Alternativ kann die Position P des Schaltelements 235 auch über einer Geschwindigkeits- und/oder Positionregelung kontrolliert werden. Dann werden die Amplitude und/oder Frequenz derart bestimmt, dass eine aus der Oszillation resultierende Kraft unterhalb der Kraftschwelle FT bleibt.

Nachdem das Schaltelement 235 die Blockierstellung 231 verlassen hat, wird das Schaltelement 235 kraftgeregelt bewegt, wie durch die Krümmung der Position P und die durchgezogenene Linie als angepasste Regelgröße 255' indiziert. Das Verlassen der Blockierstellung 231 kann anhand der Position P und/oder anhand der Geschwindigkeit des Schaltelements 235 festgestellt werden. Das Schaltelement 235 bewegt sich nun in die Endposition 233. Dabei weist die Kraft F als Zielgröße Z keine Oszillation O mehr auf. Die Oszillation O wird mit dem Verlassen der Blockierstellung 231 ausgesetzt.

Figur 3 zeigt eine schematische Darstellung eines Ablaufs eines Verfahrens 100 gemäß einer Ausführungsform der Erfindung. Das Verfahren 100 ist ein Verfahren 100 zum Schalten eines elektrisch schaltbaren Getriebes 230 für ein Fahrzeug 200a, insbesondere Nutzfahrzeug 200b. Ein derartiges Fahrzeug 200a, 200b ist mit Bezug zu Figur 1 beschrieben. Ein Bewegungsprofil 300 zum Schalten eines elektrisch schaltbaren Getriebes 230 ist mit Bezug zu Figur 2 beschrieben. Figur 3 wird unter Bezugnahme auf Figuren 1 und 2 beschrieben.

Das Verfahren 100 gemäß Figur 3 weist auf: Erfassen 110 eines eine Blockierstellung 231 eines Schaltelements 235 des Getriebes 230 betreffenden Zustands 237 des Schaltelements 235. Dabei gibt der Zustand 237 die Blockierstellung 231 wieder und/oder der Zustand 237 gibt die durch eine Bewegung des Schaltelements 235 resultierende Blockierstellung 231 an.

Es erfolgt ein Bestimmen 120 eines Regelsignals 255 zum Regeln einer Bewegung des Schaltelements 235 unter Berücksichtigung des Zustands 237 und/oder der Blockierstellung 231, wobei das Regelsignal 255 eine Zielgröße Z der Bewegung des Schaltelements 235 und eine Oszillation O um die Zielgröße Z definiert. Das Bestimmen 120 des Regelsignals 255 erfolgt derart, dass eine Kraft F auf das Schaltelement 235 eine Kraftschwelle FT unterschreitet. Die Zielgröße Z umfasst eine Kraft F, eine Geschwindigkeit und/oder eine Position P. Die Oszillation O definiert eine Frequenz H der Bewegung des Schaltelements 235. Die Oszillation O ist abhängig von einer Drehzahldifferenz DH zwischen dem Schaltelement 235 und einem mit dem Schaltelement 235 in Wirkverbindung bringbaren weiteren Schaltelements 236.

Es erfolgt ein Ausgeben 130 des Regelsignals 255 zum Bewegen des Schaltelements 235 anhand des Regelsignals 255.

Das Verfahren 100 weist auf: Erfassen 140 beziehungsweise Feststellen eines Verlassens der Blockierstellung 231.

Es erfolgt ein Bestimmen 150 eines angepassten Regelsignals 255' zum Regeln der Bewegung des Schaltelements 235 nach dem Verlassen der Blockierstellung 231, wobei das angepasste Regelsignal 255' eine Zielgröße Z der Bewegung des Schaltelements 235 ohne die Oszillation O definiert.

Es erfolgt ein Ausgeben 160 des angepassten Regelsignals 255' zum Bewegen des Schaltelements 235 anhand des angepassten Regelsignals 255'.

### Bezugszeichen (Teil der Beschreibung)

- 100: Verfahren
- 110: Erfassen
- 120: Bestimmen
- 130: Ausgeben
- 140: Erfassen
- 150: Bestimmen
- 160: Ausgeben

- 200a: Fahrzeug
- 200b: Nutzfahrzeug
- 205: Achsanordnung
- 230: elektrisch schaltbares Getriebe
- 231: Blockierstellung
- 232: Schaltaktuator
- 233: Neutralstellung
- 234: Endposition
- 235: Schaltelement
- 236: weiteres Schaltelement
- 237: Zustand
- 238: Positionssensor
- 250: Steuergerät
- 255: Regelsignal
- 255': angepasstes Regelsignal
- 300: Bewegungsprofil
- DH: Drehzahldifferenz
- H: Frequenz
- F: Kraft
- FT: Kraftschwelle
- O: Oszillation
- P: Position
- t: Zeit
- Z: Zielgröße

## Patentansprüche

1. Verfahren (100) zum Schalten eines elektrisch schaltbaren Getriebes (230) für ein Fahrzeug (200a), insbesondere Nutzfahrzeug (200b), wobei das Verfahren (100) aufweist:
- Erfassen (110) eines eine Blockierstellung (231) eines Schaltelements (235) des Getriebes (230) betreffenden Zustands (237) des Schaltelements (235);
- Bestimmen (120) eines Regelsignals (255) zum Regeln einer Bewegung des Schaltelements (235) unter Berücksichtigung des Zustands (237) und/oder der Blockierstellung (231), wobei das Regelsignal (255) eine Zielgröße (Z) der Bewegung des Schaltelements (235) und eine Oszillation (O) um die Zielgröße (Z) definiert; und
- Ausgeben (130) des Regelsignals (255) zum Bewegen des Schaltelements (235) anhand des Regelsignals (255).

2. Verfahren (100) nach Anspruch 1, wobei der Zustand (237) die Blockierstellung (231) wiedergibt und/oder der Zustand (237) gibt die durch eine Bewegung des Schaltelements (235) resultierende Blockierstellung (231) an.

3. Verfahren (100) nach Anspruch 1 oder 2, wobei die Zielgröße (Z) eine Kraft (F), eine Geschwindigkeit und/oder eine Position (P) umfasst.

4. Verfahren (100) nach einem der vorherigen, wobei die Oszillation (O) eine Frequenz (H) der Bewegung des Schaltelements (235) definiert.

5. Verfahren (100) nach einem der vorherigen Ansprüche, wobei die Oszillation (O) abhängig von einer Drehzahldifferenz (DH) zwischen dem Schaltelement (235) und einem mit dem Schaltelement (235) in Wirkverbindung bringbaren weiteren Schaltelement (236) ist.

6. Verfahren (100) nach einem der vorherigen Ansprüche, wobei das Bestimmen (120) das Regelsignals (255) derart erfolgt, dass eine Kraft (F) auf das Schaltelement (235) eine Kraftschwelle (FT) unterschreitet.

7. Verfahren (100) nach einem der vorherigen Ansprüche, wobei das Verfahren (100) aufweist:
- Erfassen (140) eines Verlassens der Blockierstellung (231);
- Bestimmen (150) eines angepassten Regelsignals (255') zum Regeln der Bewegung des Schaltelements (235) nach dem Verlassen der Blockierstellung (231), wobei das angepasste Regelsignal (255') eine Zielgröße (Z) der Bewegung des Schaltelements (235) ohne die Oszillation (O) definiert; und
- Ausgeben (160) des angepassten Regelsignals (255') zum Bewegen des Schaltelements (235) anhand des angepassten Regelsignals (255').

8. Computerprogramm und/oder computerlesbares Medium, umfassend Befehle, die bei der Ausführung des Programms bzw. der Befehle durch einen Computer diesen veranlassen, das Verfahren (100) und/oder die Schritte des Verfahrens (100) nach einem der vorherigen Ansprüche durchzuführen.

9. Steuergerät (250) für ein Fahrzeug (200a), insbesondere Nutzfahrzeug (200b), mit einem elektrisch schaltbaren Getriebe (230), wobei das Steuergerät (250) dazu eingerichtet ist, das Verfahren (100) nach einem der Ansprüche 1 bis 7 durchzuführen.

10. Elektrisch schaltbares Getriebe (230) mit einem Schaltelement (235) und einem Steuergerät (250) nach Anspruch 9.

11. Achsanordnung (205) für ein Fahrzeug (200a), insbesondere Nutzfahrzeug (200b), wobei die Achsanordnung (205) ein elektrisch schaltbares Getriebe (230) nach Anspruch 10 aufweist.

12. Fahrzeug (200a), insbesondere Nutzfahrzeug (200b), mit einem elektrisch schaltbaren Getriebe (230) nach Anspruch 10 und/oder einer Achsanordnung (205) nach Anspruch 11.
